# EUROPEAN PATENT APPLICATION

(11) **EP 1 524 372 A1**
(43) Date of publication of application: **20.04.2005**
(21) Application number: 03380217.4
(22) Date of filing: 06.10.2003
(51) Int. Cl.: E03C 1/10, F16K 24/06

(54) **Suction valve**

(71) Applicant: Elaboracion de plásticos espanoles, S.A., 19208 Alovera (Guadalajara) (ES)
(72) Inventor: Wollstein Beltra, Jesus, 19208 Alovera (Guadalajara) (ES)
(74) Representative: Esteban Perez-Serrano, Maria Isabel

(57) **Abstract**

Suction valve which is employed in sewage pipes and which prevents siphonage and which thanks to its constructional characteristics, when carrying out the dismantling of the valve the entire mechanism remains in its interior, having for this purpose in the interior of the cap (3) an intermediate piece (4) of dimensions such that it remains secured on the cap (3). This intermediate piece (4) has a central ring (4.1) on which on its upper part is housed a seal (5), said central ring (4.1) being housed by its lower part in the interior of a central ring (2.1) of a branch (2) of the valve body (1) so that when dismantling the cap (3) the assembly formed by the intermediate piece (4) and the seal (5) remains housed inside the cap (3).

## Description

### OBJECT OF THE INVENTION

The object of the present utility model is a suction valve employed in the sewage pipes which are connected by means of an air trap to WCs or the like.

The present invention is characterised in its special configuration and design, which allows a valve to be obtained which, when inserted in the sewage pipes prevents siphonage taking place, wherein thanks to its constructional characteristics when dismantling of the valve is carried out the whole mechanism remains mounted in its interior, preventing the loss of the seal, facilitating its later re-assembly.

Therefore, the present invention falls within the ambit of the elements and devices used for the purpose of preventing induced siphonage of WCs or the like when the evacuation of one of them takes place into a sewage pipe.

### BACKGROUND OF THE INVENTION

In the vertical sewage pipes to which various discharging units are connected, it occurs that in the event of evacuation of one of them, the discharged fluids as a whole in their displacement through the vertical pipe produces a vacuum and suction of the liquid which is present in the air traps of WCs and the like. This situation is clearly not desirable, since it leaves one or several of the air traps of the WCs higher up without liquid facilitating thereby the escape of smelly air.

This problem has been solved by the employment of valve elements which, mounted in the sewage pipes and during the evacuation of one of the WCs, allows the suction which arises to take place directly from the exterior, instead of the air traps, avoiding siphonage from the latter.

These valve elements come with a series of pieces, among others like the seal housed in the cap. One of the drawbacks that these valve elements presents is that when the cap is dismantled, the set of pieces housed in its interior do not remain attached to the cap, for which reason the loss and dispersion of the same are frequent, with the ensuing inconvenience supposed by the time taken to locate the same or the cost of replacement.

Therefore, the objective of the present invention is to overcome the aforesaid drawbacks, developing to this end a suction valve which prevents siphonage by suction, wherein the entire mechanism of protection and access to the exterior remains housed in the cap when the latter is dismantled, preventing the loss of the seal and facilitating its re-assembly, which is reduced to the screwing of the cap on the body.

### DESCRIPTION OF THE INVENTION

The suction valve object of the invention consists of a valve body inserted in the sewage pipe, having a branch on which there is a central ring-shaped element. On this assembly is mounted the cap in the interior of which is housed an intermediate piece fitting perfectly against the inside walls of the cap, said intermediate piece being housed in the interior part of the cap.

The intermediate piece which makes contact between the upper end of the branch of the valve body and the cap, has in its central part a concentric ring of inside diameter such that it allows the seal to be housed and secured, whereby by mounting the seal on said interior ring of the intermediate piece, and subsequently housing the assembly on the bottom of the cap, the dropping and loss of the seal are avoided when dismantling the cap, since the entire mechanism remains housed in its interior. The seal has a peripheral flange which rests directly on the interior ring which the intermediate piece has.

### DESCRIPTION OF THE DRAWINGS

To complete the description that will be given below and with the object of assisting in a better understanding of the characteristics thereof, the present descriptive specification is accompanied with a set of drawings in the figures of which, by way of illustration and not restrictively, the most significant details of the invention are represented.

Figure 1 shows a plan, elevation and side views, partially in cross section of the suction valve assembly.

Figure 2 shows from one side, the cap assembly ' with the entire mechanism housed in its interior, without being screwed on the valve body.

Figure 3 shows from the other side, the perfectly mounted assembly, where in partial cross section of the same, the form can be observed in which the pieces of the valve object of the invention fit together.

### PREFERRED EMBODIMENT OF THE INVENTION

In the light of the aforementioned figures a description is given next of a preferred method of embodiment of the invention as well as the explanation of the drawings.

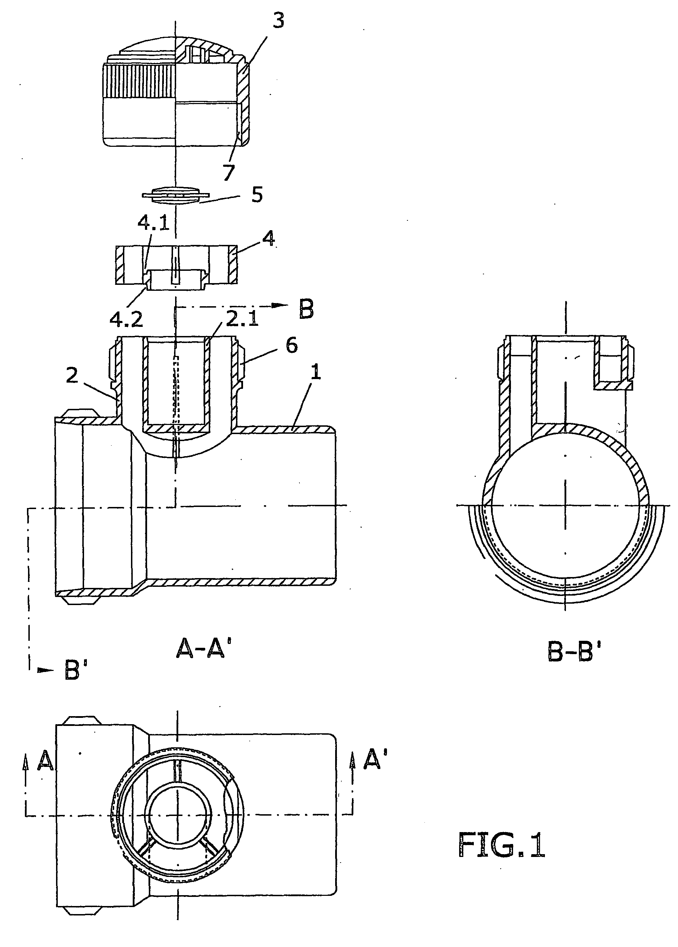

In figure 1, it can be seen how the suction valve has a valve body (1) with its inflow and outflow extremities, one of the extremities being threaded, said valve body (1) having a branch (2) with threaded end (6). Said branch (2) has a ring (2.1) in the interior, mounted concentrically. Likewise the intermediate piece (4) is shown which has on the interior a concentric ring (4.1) which projects slightly on its lower side, having a step (4.2) so that the projecting part of said interior ring (4.1) is housed in the interior of the central element (2.1), the rest of the ring (4.1) resting on the upper edge of the ring (2.1) of the branch (2).

The seal (5) has dimensions such that it is housed by the upper part and in the interior space defined by the ring (4.2), having a projecting flange which rests on the upper edge of said ring (4.2). The assembly of intermediate piece (4) and seal (5) is housed inside the cap (3), which in its interior on its lower part has a thread (7) complementary to the thread (6) which is present on the valve branch element.

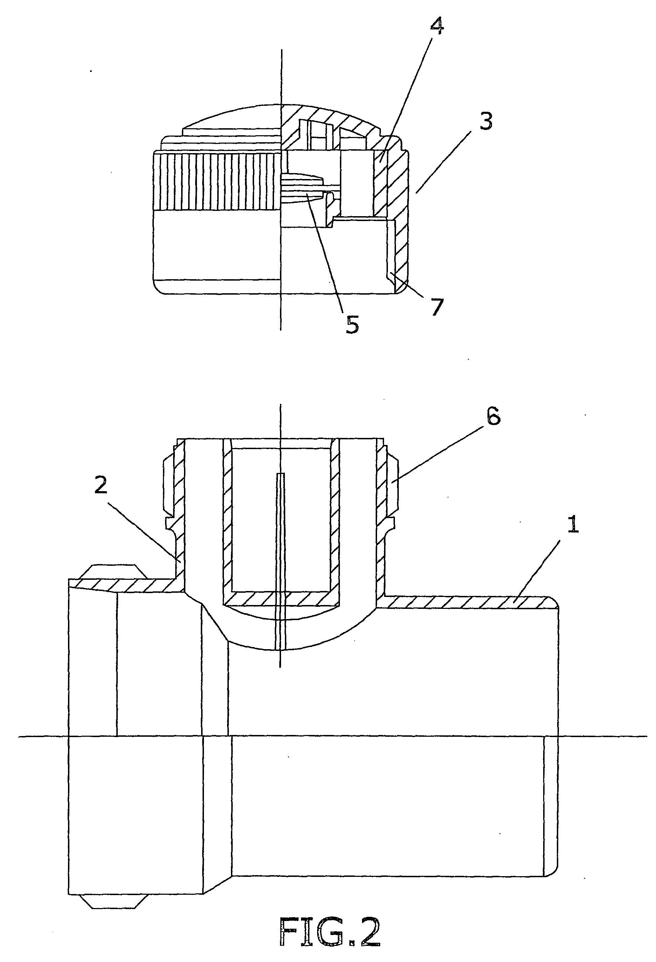

In figure 2, it can be seen how in the interior the cap (3), the assembly formed by the intermediate piece (4) and seal (5) is housed in a such way that when dismantling the cap, said assembly remains housed in its interior preventing the loss of the seal, which facilitates the re-assembly, this being reduced to the screwing of the cap (3) on the valve.

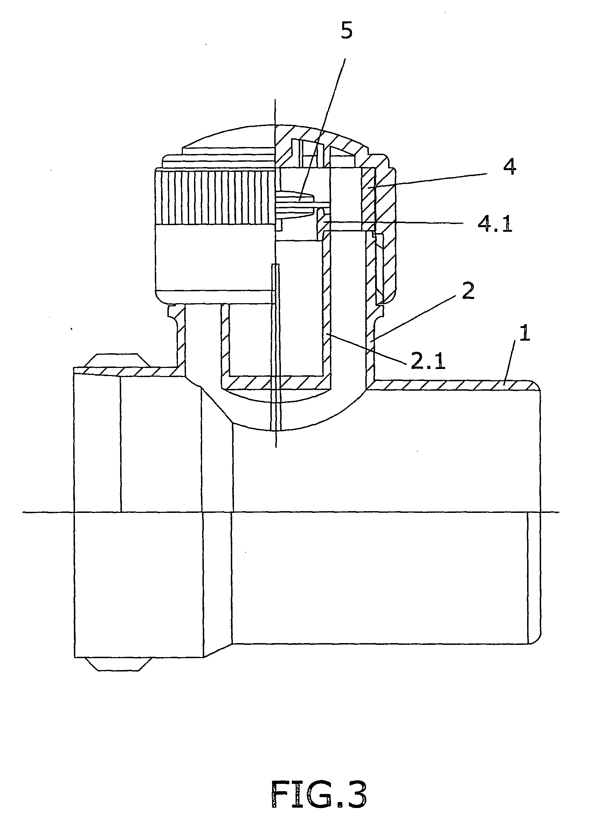

In figure 3, the whole mounted assembly can be observed, with the cap (3) screwed on the valve and the position adopted by the intermediate piece (14) and the arrangement of the seal (5) on the interior ring (4.1) which said piece (4) has, as well as how the latter is seated on the upper end of the valve branch.

It is not considered necessary to extend this description further for an expert in the matter to understand the scope of the invention and the benefits which derive from the same.

The materials, form, size and arrangement of the elements will be capable of variation provided they do not alter the essence of the invention.

The terms in which this specification has been written are always to be taken in the broadest sense and not restrictively.

## Claims

1. Suction valve which consists of a valve body (1) on which there is a branch (2) the upper end of which is threaded (6), complementary to the thread (7) which is present on the lower part of the cap (3). It is **characterised in that** in the interior of the cap (3) is housed an intermediate piece (4) of dimensions such that it remains secured in the cap, said intermediate piece (4) having a central ring (4.1) on which on its upper part is housed the seal (5) which remains resting against the upper edge of said central ring (4.1), whilst underneath said central ring (4.1) projects from the intermediate piece (4), having a step part of which is housed in the interior of the central ring (2.1) which the branch (2) of the valve body (1) has and part of which rests on the upper edge of the interior ring (2), the whole assembly being formed by the intermediate piece (4) and the seal (5) housed inside the cap (3).
